(19) **Europäisches Patentamt / European Patent Office / Office européen des brevets**

(11) **EP 4 787 724 A1**

(12) # EUROPEAN PATENT APPLICATION

(43) Date of publication:
**05.08.2026 Bulletin 2026/32**

(21) Application number: **26154702.0**

(22) Date of filing: **28.01.2026**

(51) International Patent Classification (IPC):
*H04B 7/0456* (2017.01) *H04B 17/10* (2015.01)

(52) Cooperative Patent Classification (CPC):
**H04B 7/0456; H04B 17/102**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.02.2025 FI 20255082**

(71) Applicant: **Nokia Solutions and Networks Oy**
**02610 Espoo (FI)**

(72) Inventors:
• **KOTESHWAR SRINATH, Pavan**
**Orsay (FR)**
• **MANDELLI, Silvio**
**Ludwigsburg (DE)**
• **ZEJNILAGIC, Azra**
**Munich (DE)**

(74) Representative: **Nokia EPO representatives**
**Nokia Technologies Oy**
**Karakaari 7**
**02610 Espoo (FI)**

(54) **METHOD AND APPARATUSES FOR RADIATED POWER PREDICTION**

(57) The present disclosure relates to an apparatus comprising at least one processor and at least one memory storing instructions that, when executed by the at least one processor, cause the apparatus at least to perform: Obtaining a plurality of precoding vectors. Obtaining a set of radiated power measurement values, each radiated power measurement value within the set of radiated power measurement values corresponding to an angle pair within a set of angle pairs and to a precoding vector within the plurality of precoding vectors. Training a machine learning model to output a set of prediction vectors for predicting radiated power values from an input of the set of angle pairs, using training data comprising the set of radiated power measurement values as a ground truth and the plurality of precoding vectors.

OBTAIN PRECODING VECTORS — 201

OBTAIN SET OF RADIATED POWER MEASUREMENT VALUES — 202

TRAIN MACHINE LEARNING MODEL TO OUTPUT SET OF PREDICTION VECTORS FROM INPUT OF SET OF ANGLE PAIRS — 203

FIG. 2

EP 4 787 724 A1

## Description

### TECHNICAL FIELD

Various example embodiments described herein relate to the field of wireless communications.

### BACKGROUND

In wireless communications, multiple-input multiple-output MIMO technology and increase in the number of antennas may improve data speed but also increase exposure to radio frequency (RF) electromagnetic fields (EMF). It is an accepted practice to determine if RF EMF exposure regulations have been met by measuring equivalent isotropic radiated power (EIRP). The World Radiocommunication Conference 2023 (WRC-23) defined above-the-horizon (ATH)-EIRP limits for access nodes (gNBs) operating in the n104 band (6425-7125 MHz). When assessing a gNB compliance with RF EMF exposure limits, the average EIRP, i.e., averaged over a sliding time window of 6 to 30 minutes, is required to be within certain limits. Similar limits for other International Mobile Telecommunications (IMT) bands above 6 GHz are expected to be documented in future WRC meetings.

To perform effective RF EMF control, EIRP prediction for multi-user (MU-) MIMO systems may be needed. Predicting EIRP assuming perfect hardware and assuming a linear beamformer may be used. However, such predictions may be affected by mismatches between the assumptions and reality. Thus, an EIRP prediction method taking into account, e.g., system-inherent calibration errors may be beneficial.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments of the present disclosure may enable improving data transmission or reception. This benefit may be achieved by the features of the independent claims. Further example embodiments are provided in the dependent claims, the detailed description, and the drawings.

According to a first aspect, an apparatus is disclosed. The apparatus may comprise at least one processor and at least one memory storing instructions that, when executed by the at least one processor, may cause the apparatus to at least to perform: Obtaining a plurality of precoding vectors. Obtaining a set of radiated power measurement values, a radiated power measurement value within the set of radiated power measurement values corresponding to an angle pair within a set of angle pairs and to a precoding vector within the plurality of precoding vectors. Training a machine learning model to output a set of prediction vectors for predicting radiated power values from an input of the set of angle pairs, using training data comprising the set of radiated power measurement values as a ground truth and the plurality of precoding vectors.

According to an example embodiment of the first aspect, the set of angle pairs may correspond to a first set of angle values comprising one or more elevation angle values and a second set of angle values comprising one or more azimuth angle values.

According to an example embodiment of the first aspect, the training the machine learning model may comprise causing the apparatus to perform: Initializing one or more parameter sets, a parameter set per angle pair within the set of angle pairs. Initializing an analog error component matrix. Performing, until a stopping criterion is fulfilled, an iterative training procedure comprising: computing the set of prediction vectors, a prediction vector within the set of prediction vectors per angle pair within the set of angle pairs, based on the one or more parameter sets, the analog error component matrix, and a fixed analog weight matrix defined by an antenna array configuration; computing a set of predicted radiated power values, a predicted radiated power value per angle pair within the set of angle pairs and per precoding vector within the plurality of precoding vectors, based on the prediction vector corresponding to the angle pair and the precoding vectors; computing a loss value between the set of predicted radiated power values and the set of radiated power measurement values; and updating the one or more parameter sets and the analog error component matrix, based on the loss value. Computing the set of prediction vectors, based on the updated one or more parameter sets, the updated analog error component matrix, and the fixed analog weight matrix.

According to an example embodiment of the first aspect, a parameter set within the one or more parameter sets may comprise an array steering vector, a first radiating element radiation response, and a second radiating element radiation response.

According to an example embodiment of the first aspect, the computing the set of predicted radiated power values may comprise causing the apparatus to perform, per angle pair within the set of angle pairs, per precoding vector within the plurality of precoding vectors: Computing a dot product between the prediction vector and the precoding vector.

Computing a magnitude of the dot product. Computing a square of the magnitude of the dot product.

According to an example embodiment of the first aspect, the updating the plurality of parameter sets may comprise using stochastic gradient descent.

According to an example embodiment of the first aspect, the obtaining the plurality of precoding vector may comprise causing the apparatus to perform generating the plurality of precoding vectors. The obtaining the set of radiated power measurement values may comprise causing the apparatus to perform: Transmitting, to a radio unit, the plurality of precoding vectors. Receiving, from a database, the set of radiated power measurement values.

According to an example embodiment of the first aspect, the obtaining the plurality of precoding vectors may comprise causing the apparatus to perform receiving, from a distributed unit, the plurality of precoding vectors. The obtaining the set of radiated power measurement values may comprise causing the apparatus to perform: Performing, per precoding vector within the plurality of precoding vectors, beamforming and transmitting. Receiving, from the distributed unit, the set of radiated power measurement values.

According to an example embodiment of the first aspect, the apparatus may be further caused to perform: Transmitting, to the distributed unit, the set of prediction vectors.

According to an example embodiment of the first aspect, the apparatus may be further caused to perform: Storing the set of prediction vectors.

According to an example embodiment of the first aspect, the radiated power may comprise equivalent isotropic radiated power.

According to a second aspect, a method is disclosed. The method may be computer-implemented. The method may comprise: Obtaining a plurality of precoding vectors. Obtaining a set of radiated power measurement values, a radiated power measurement value within the set of radiated power measurement values corresponding to an angle pair within a set of angle pairs and to a precoding vector within the plurality of precoding vectors. Training a machine learning model to output a set of prediction vectors for predicting radiated power values from an input of the set of angle pairs, using training data comprising the set of radiated power measurement values as ground truth and the plurality of precoding vectors.

According to an example embodiment of the second aspect, the set of angle pairs may correspond to a first set of angle values comprising one or more elevation angle values and a second set of angle values comprising one or more azimuth angle values.

According to an example embodiment of the second aspect, the training the machine learning model may further comprise: Initializing one or more parameter sets, a parameter set per angle pair within the set of angle pairs. Initializing an analog error component matrix. Performing, until a stopping criterion is fulfilled, an iterative training procedure comprising: computing the set of prediction vectors, a prediction vector within the set of prediction vectors per angle pair within the set of angle pairs, based on the one or more parameter sets, the analog error component matrix, and a fixed analog weight matrix defined by an antenna array configuration; computing a set of predicted radiated power values, a predicted radiated power value per angle pair within the set of angle pairs and per precoding vector within the plurality of precoding vectors, based on the prediction vector corresponding to the angle pair and the precoding vectors; computing a loss value between the set of predicted radiated power values and the set of radiated power measurement values; and updating the one or more parameter sets and the analog error component matrix, based on the loss value. Computing the set of prediction vectors, based on the updated one or more parameter sets, the updated analog error component matrix, and the fixed analog weight matrix.

According to an example embodiment of the second aspect, a parameter set within the one or more parameter sets may comprise an array steering vector, a first radiating element radiation response, and a second radiating element radiation response.

According to an example embodiment of the second aspect, the computing the set of predicted radiated power values may further comprise: Computing, per angle pair within the set of angle pairs, per precoding vector within the plurality of precoding vectors, a dot product between the prediction vector and the precoding vector. Computing, per angle pair and per precoding vector, a magnitude of the dot product. Computing, per angle pair and per precoding vector, a square of the magnitude of the dot product.

According to an example embodiment of the second aspect, the updating the plurality of parameter sets may comprise using stochastic gradient descent.

According to an example embodiment of the second aspect, the obtaining the plurality of precoding vector may further comprise generating the plurality of precoding vectors. The obtaining the set of radiated power measurement values may further comprise: Transmitting, to a radio unit, the plurality of precoding vectors. Receiving, from a database, the set of radiated power measurement values.

According to an example embodiment of the second aspect, the obtaining the plurality of precoding vectors may further comprise receiving, from a distributed unit, the plurality of precoding vectors. The obtaining the set of radiated power measurement values may further comprise: Performing, per precoding vector within the plurality of precoding vectors, beamforming and transmitting. Receiving, from the distributed unit, the set of radiated power measurement values.

According to an example embodiment of the second aspect, the method may further comprise: Transmitting, to the distributed unit, the set of prediction vectors.

According to an example embodiment of the second aspect, the method may further comprise: Storing the set of prediction vectors.

According to an example embodiment of the second aspect, the radiated power may comprise equivalent isotropic radiated power.

According to a third aspect, an apparatus is disclosed. The apparatus may comprise at least one processor and at least one memory storing instructions that, when executed by the at least one processor, may cause the apparatus to at least to perform: Obtaining one or more precoding vectors. Obtaining one or more angle pairs. Determining one or more predicted radiated power values, based on the one or more precoding vectors and the one or more angle pairs, using the machine learning model trained with a method according to the second aspect.

According to a fourth aspect, a computer-readable medium is disclosed. The computer-readable medium may comprise program instructions which, when executed by an apparatus, may cause the apparatus to perform at least the following: Obtaining a plurality of precoding vectors. Obtaining a set of radiated power measurement values, a radiated power measurement value within the set of radiated power measurement values corresponding to an angle pair within a set of angle pairs and to a precoding vector within the plurality of precoding vectors. Training a machine learning model to output a set of prediction vectors for predicting radiated power values from an input of the set of angle pairs, using training data comprising the set of radiated power measurement values as ground truth and the plurality of precoding vectors.

According to an example embodiment of the fourth aspect, the set of angle pairs may correspond to a first set of angle values comprising one or more elevation angle values and a second set of angle values comprising one or more azimuth angle values.

According to an example embodiment of the fourth aspect, the training the machine learning model may comprise causing the apparatus to perform: Initializing one or more parameter sets, a parameter set per angle pair within the set of angle pairs. Initializing an analog error component matrix. Performing, until a stopping criterion is fulfilled, an iterative training procedure comprising: computing the set of prediction vectors, a prediction vector within the set of prediction vectors per angle pair within the set of angle pairs, based on the one or more parameter sets, the analog error component matrix, and a fixed analog weight matrix defined by an antenna array configuration; computing a set of predicted radiated power values, a predicted radiated power value per angle pair within the set of angle pairs and per precoding vector within the plurality of precoding vectors, based on the prediction vector corresponding to the angle pair and the precoding vectors; computing a loss value between the set of predicted radiated power values and the set of radiated power measurement values; and updating the one or more parameter sets and the analog error component matrix, based on the loss value. Computing the set of prediction vectors, based on the updated one or more parameter sets, the updated analog error component matrix, and the fixed analog weight matrix.

According to an example embodiment of the fourth aspect, a parameter set within the one or more parameter sets may comprise an array steering vector, a first radiating element radiation response, and a second radiating element radiation response.

According to an example embodiment of the fourth aspect, the computing the set of predicted radiated power values may comprise causing the apparatus to perform, per angle pair within the set of angle pairs, per precoding vector within the plurality of precoding vectors: Computing a dot product between the prediction vector and the precoding vector. Computing a magnitude of the dot product. Computing a square of the magnitude of the dot product.

According to an example embodiment of the fourth aspect, the updating the plurality of parameter sets may comprise using stochastic gradient descent.

According to an example embodiment of the fourth aspect, the obtaining the plurality of precoding vector may comprise causing the apparatus to perform generating the plurality of precoding vectors. The obtaining the set of radiated power measurement values may comprise causing the apparatus to perform: Transmitting, to a radio unit, the plurality of precoding vectors. Receiving, from a database, the set of radiated power measurement values.

According to an example embodiment of the fourth aspect, the obtaining the plurality of precoding vectors may comprise causing the apparatus to perform receiving, from a distributed unit, the plurality of precoding vectors. The obtaining the set of radiated power measurement values may comprise causing the apparatus to perform: Performing, per precoding vector within the plurality of precoding vectors, beamforming and transmitting. Receiving, from the distributed unit, the set of radiated power measurement values.

According to an example embodiment of the fourth aspect, the apparatus may be further caused to perform: Transmitting, to the distributed unit, the set of prediction vectors.

According to an example embodiment of the fourth aspect, the apparatus may be further caused to perform: Storing the set of prediction vectors.

According to an example embodiment of the fourth aspect, the radiated power may comprise equivalent isotropic radiated power.

According to a fifth aspect, a computer program is disclosed. The computer program may comprise instructions for causing an apparatus to at least: Obtain a plurality of precoding vectors. Obtain a set of radiated power measurement values, a radiated power measurement value within the set of radiated power measurement values corresponding to an angle pair within a set of angle pairs and to a precoding vector within the plurality of precoding vectors. Train a machine learning model to output a set of prediction vectors for predicting radiated power values from an input of the set of angle pairs, using training data comprising the set of radiated power measurement values as ground truth and the plurality of precoding vectors.

According to an example embodiment of the fifth aspect, the set of angle pairs may correspond to a first set of angle values comprising one or more elevation angle values and a second set of angle values comprising one or more azimuth angle values.

According to an example embodiment of the fifth aspect, the causing the apparatus to train the machine learning model may comprise causing the apparatus to: Initialize one or more parameter sets, a parameter set per angle pair within the set of angle pairs. Initialize an analog error component matrix. Perform, until a stopping criterion is fulfilled, an iterative training procedure comprising causing the apparatus to: compute the set of prediction vectors, a prediction vector within the set of prediction vectors per angle pair within the set of angle pairs, based on the one or more parameter sets, the analog error component matrix, and a fixed analog weight matrix defined by an antenna array configuration; compute a set of predicted radiated power values, a predicted radiated power value per angle pair within the set of angle pairs and per precoding vector within the plurality of precoding vectors, based on the prediction vector corresponding to the angle pair and the precoding vectors; compute a loss value between the set of predicted radiated power values and the set of radiated power measurement values; and update the one or more parameter sets and the analog error component matrix, based on the loss value. Compute the set of prediction vectors, based on the updated one or more parameter sets, the updated analog error component matrix, and the fixed analog weight matrix.

According to an example embodiment of the fifth aspect, a parameter set within the one or more parameter sets may comprise an array steering vector, a first radiating element radiation response, and a second radiating element radiation response.

According to an example embodiment of the fifth aspect, the causing the apparatus to compute the set of predicted radiated power values may comprise causing the apparatus to, per angle pair within the set of angle pairs, per precoding vector within the plurality of precoding vectors: Compute a dot product between the prediction vector and the precoding vector. Compute a magnitude of the dot product. Compute a square of the magnitude of the dot product.

According to an example embodiment of the fifth aspect, the causing the apparatus to update the plurality of parameter sets may comprise using stochastic gradient descent.

According to an example embodiment of the fifth aspect, the causing the apparatus to obtain the plurality of precoding vector may comprise causing the apparatus to generate the plurality of precoding vectors. The causing the apparatus to obtain the set of radiated power measurement values may comprise causing the apparatus to: Transmit, to a radio unit, the plurality of precoding vectors. Receive, from a database, the set of radiated power measurement values.

According to an example embodiment of the fifth aspect, the causing the apparatus to obtain the plurality of precoding vectors may comprise causing the apparatus to receive, from a distributed unit, the plurality of precoding vectors. The causing the apparatus to obtain the set of radiated power measurement values may comprise causing the apparatus to: Perform, per precoding vector within the plurality of precoding vectors, beamforming and transmitting. Receive, from the distributed unit, the set of radiated power measurement values.

According to an example embodiment of the fifth aspect, the apparatus may be further caused to: Transmit, to the distributed unit, the set of prediction vectors.

According to an example embodiment of the fifth aspect, the apparatus may be further caused to: Store the set of prediction vectors.

According to an example embodiment of the fifth aspect, the radiated power may comprise equivalent isotropic radiated power.

According to a sixth aspect, an apparatus is disclosed. The apparatus may comprise means for performing at least the following: Obtaining a plurality of precoding vectors. Obtaining a set of radiated power measurement values, a radiated power measurement value within the set of radiated power measurement values corresponding to an angle pair within a set of angle pairs and to a precoding vector within the plurality of precoding vectors. Training a machine learning model to output a set of prediction vectors for predicting radiated power values from an input of the set of angle pairs, using training data comprising the set of radiated power measurement values as a ground truth and the plurality of precoding vectors.

According to an example embodiment of the sixth aspect, the set of angle pairs may correspond to a first set of angle values comprising one or more elevation angle values and a second set of angle values comprising one or more azimuth angle values.

According to an example embodiment of the sixth aspect, the apparatus may comprise means for performing the training the machine learning model by: Initializing one or more parameter sets, a parameter set per angle pair within the set of angle pairs. Initializing an analog error component matrix. Performing, until a stopping criterion is fulfilled, an iterative training procedure comprising: computing the set of prediction vectors, a prediction vector within the set of prediction vectors per angle pair within the set of angle pairs, based on the one or more parameter sets, the analog error component matrix, and a fixed analog weight matrix defined by an antenna array configuration; computing a set of predicted radiated power values, a predicted radiated power value per angle pair within the set of angle pairs and per precoding vector within the plurality of precoding vectors, based on the prediction vector corresponding to the angle pair and the precoding vectors; computing a loss value between the set of predicted radiated power values and the set of radiated power measurement values; and updating the one or more parameter sets and the analog error component matrix, based on the loss value. Computing the set of prediction vectors, based on the updated one or more parameter sets, the updated analog error component matrix, and the fixed analog weight matrix.

According to an example embodiment of the sixth aspect, a parameter set within the one or more parameter sets may comprise an array steering vector, a first radiating element radiation response, and a second radiating element radiation response.

According to an example embodiment of the sixth aspect, the apparatus may further comprise means for performing the computing the set of predicted radiated power values by performing, per angle pair within the set of angle pairs, per precoding vector within the plurality of precoding vectors: Computing a dot product between the prediction vector and the precoding vector. Computing a magnitude of the dot product. Computing a square of the magnitude of the dot product.

According to an example embodiment of the sixth aspect, the apparatus may further comprise means for performing the updating the plurality of parameter sets by using stochastic gradient descent.

According to an example embodiment of the sixth aspect, the apparatus may further comprise means for performing the obtaining the plurality of precoding vector by generating the plurality of precoding vectors. The apparatus may further comprise means for performing the obtaining the set of radiated power measurement values by: transmitting, to a radio unit, the plurality of precoding vectors; and receiving, from a database, the set of radiated power measurement values.

According to an example embodiment of the sixth aspect, the apparatus may further comprise means for performing the obtaining the plurality of precoding vectors by receiving, from a distributed unit, the plurality of precoding vectors. The apparatus may further comprise means for performing the obtaining the set of radiated power measurement values by: performing, per precoding vector within the plurality of precoding vectors, beamforming and transmitting; and receiving, from the distributed unit, the set of radiated power measurement values.

According to an example embodiment of the sixth aspect, the apparatus may further comprise means for transmitting, to the distributed unit, the set of prediction vectors.

According to an example embodiment of the sixth aspect, the apparatus may further comprise means for storing the set of prediction vectors.

According to an example embodiment of the sixth aspect, the radiated power may comprise equivalent isotropic radiated power.

According to some aspects, there is provided the subject matter of the independent claims. Some further aspects are defined in the dependent claims.

Any example embodiment may be combined with one or more other example embodiments. Many of the attendant features will be more readily appreciated as they become better understood by reference to the following detailed description considered in connection with the accompanying drawings.

BRIEF DESCRIPTION OF THE DRAWINGS

Some example embodiments will now be described with reference to the accompanying drawings. In the drawings:

FIG. 1 shows an example of a communication network to which examples disclosed herein may be applied;
FIG. 2 shows example functionalities of an apparatus according to an example embodiment;
FIG. 3 shows example functionalities of an apparatus according to an example embodiment;
FIG. 4 shows example functionalities of an apparatus according to an example embodiment;
FIG. 5 shows a signaling diagram according to an example embodiment;
FIG. 6 shows a signaling diagram according to an example embodiment;
FIG. 7A and FIG. 7B show experimental results obtained for an apparatus according to an example embodiment;
FIG. 8A and FIG. 8B show experimental results obtained for an apparatus according to an example embodiment;
FIG. 9 shows example functionalities of an apparatus according to an example embodiment; and
FIG. 10 shows a schematic block diagram of an apparatus according to some example embodiments.

Like references are used to designate like parts in the accompanying drawings.

DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Although the specification may refer to "an", "one", or "some" embodiment(s) in several locations of the text, this does not necessarily mean that each such reference is to the same embodiment(s), or that the feature may not apply to other embodiments. Single features of different embodiments may also be combined to provide other embodiments. Further, when a particular feature, structure, or characteristic is described in connection of an embodiment, it is within the knowledge of one skilled in the art to apply such feature, structure, or characteristic in connection with other embodiments whether or not explicitly described. Furthermore, words "comprising" and "including" should be understood as not limiting the described embodiments/examples to consist of only those features that have been mentioned and such embodiments/examples may contain also features/structures that have not been specifically mentioned.

Furthermore, although numerative terminology, such as "first", "second", etc., may be used herein to describe various embodiments, elements, or features, it should be understood that these embodiments, elements, or features should not be limited by this numerative terminology. This numerative terminology is used herein only to distinguish one embodiment, element, or feature from another embodiment, element, or feature. For example, a first radiating element radiation response discussed below could be called a second radiating element radiation response, and vice versa, without departing from the teachings of the present disclosure.

Embodiments described may be implemented in a communication network, such as any of the following radio access technologies (RATs): World-wide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE), 5G (also called NR), or any future RAT such as 6G. Moreover, communication within the communication network may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), and/or Discrete Fourier Transform spread OFDM (DFT-s-OFDM).

As used herein, the term "network device" or "network node" refers to a node in a communication network via which user equipment may access the network and/or which is capable of controlling radio communication and man-aging radio resources within a cell. The network node or network device may be referred to as a base station (BS), an access point (AP) or an access node. The network device may be, depending on the applied technology, for example, a node B (NodeB or NB), an evolved NodeB (eNodeB or eNB), an NR NB (also referred to as a gNB), a Radio Unit (RU), a Remote Radio Unit (RRU), a radio head (RH), a remote radio head (RRH), a relay, an Integrated Access and Backhaul (IAB) node, a low power node, a non-terrestrial network (NTN) or non-ground network device such as a satellite network device, a low earth orbit (LEO) satellite and a geosynchronous earth orbit (GEO) satellite, or an aircraft network device.

Moreover, in connection of split radio access network (RAN), the network device refers to a centralized unit (CU) of a base station and/or a distributed unit (DU) of a base station. An interface between CU and DU may be referred to as an F1 interface in NR. In the split RAN architecture, node operations may be carried out, at least partly, in the central/centralized unit, CU, (e.g. server, host or node) operationally coupled to the DU, (e.g. a radio head/node). One CU may control one or more DUs, acting at least as transmit/receive (Tx/Rx) nodes. In some embodiments, the DUs may comprise, e.g., a radio link control (RLC) layer, a medium access control (MAC) layer, and a physical (PHY) layer, whereas the CU may comprise the layers above RLC layer, such as a packet data convergence protocol (PDCP) layer, a radio resource control (RRC) layer, and an internet protocol (IP) layer. Other functional splits are possible too. In practice, any processing task may be performed in either the CU or the DU and the boundary where the responsibility is shifted between the CU and the DU may depend on the applied implementation.

The term "terminal device" refers to any end device that may be capable of wireless communication. By way of example, a terminal device may be referred to as a communication device, user equipment (UE), a Subscriber Station (SS), or a Mobile Station (MS). The terminal device may include a mobile phone, a cellular phone, a smart phone, voice over IP (VoIP) phones, wireless local loop phones, a tablet, a wearable terminal device, a personal digital assistant (PDA), portable computers, desktop computer, image capture terminal de-vices such as digital cameras, gaming terminal devices, music storage and playback appliances, vehicle-mounted wireless terminal devices, USB dongles, an Internet of Things (IoT) device, a watch or other wearable device, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like.

The terms "transmission" and/or "reception", as used herein, may refer to wirelessly transmitting and/or receiving via a wireless propagation channel on radio resources.

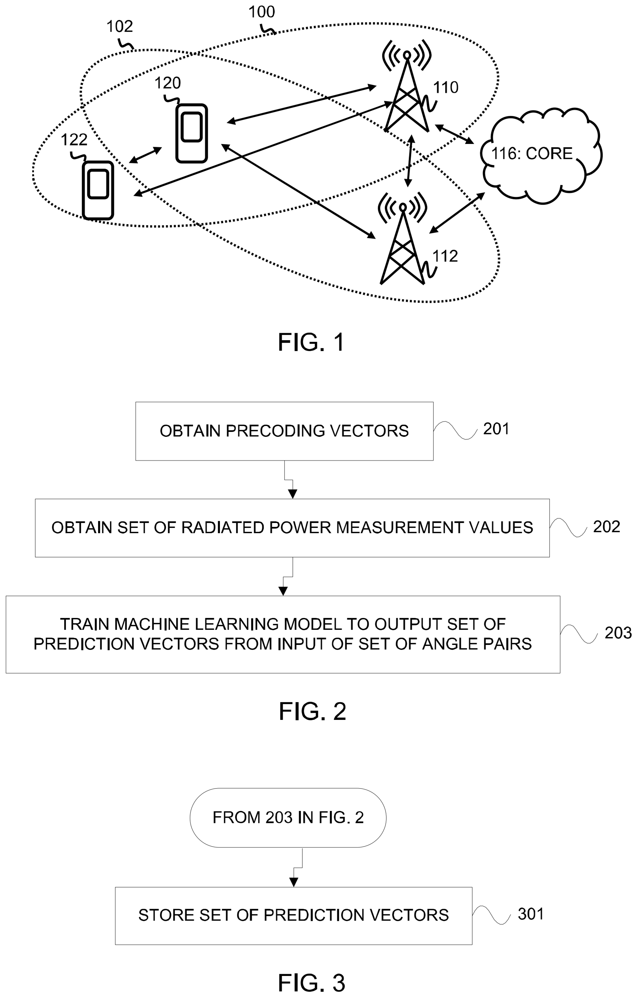

FIG. 1 depicts examples of simplified system architectures only showing some elements and functional entities, all being logical units, whose implementation may differ from what is shown. The connections shown in FIG. 1 are logical connections; the actual physical connections may be different. It is apparent to a person skilled in the art that the system typically comprises also other functions and structures than those shown in FIG. 1.

The embodiments are not, however, restricted to the system given as an example but a person skilled in the art may apply the solution to other communication systems provided with necessary properties.

FIG. 1 illustrates an example of a communication network to which examples disclosed herein may be applied. The communication network or a cellular communication network may comprise a network node 110 providing one or more cells, such as cell 100, and a network node 112 providing one or more other cells, such as cell 102. In one example, the node 110, 112 may be an access node such as (e/g)NodeB providing or serving devices in a cell. In one example, the node 102 may be a non-3GPP access node. It should be appreciated that (e/g)NodeBs or their functionalities may be implemented by using any node, host, server or access point etc. entity suitable for such a usage. Each cell 100, 102 may be, e.g., a macro cell, a micro cell, femto, or a pico cell, for example. The cell may define a coverage area or a service area of the corresponding access node.

The network node 110 may provide a user equipment (UE) 120 (one or more UEs) with wireless access to the communication network. The wireless access may comprise downlink (DL) communication from the network node to the UE 120 and uplink (UL) communication from the UE 120 to the network node. Examples of uplink channels comprise physical uplink control channel (PUCCH) for transmitting control information and physical uplink shared channel (PUSCH) for transmitting data towards the network. Examples of downlink channels comprise physical downlink control channel (PDCCH) for transmitting control information and physical downlink shared channel (PDSCH) for transmitting data towards the user equipment.

There may be a plurality of UEs 120, 122 in the system. Each of them may be served by the same or by different network nodes 110, 112. UE may be configured with dual connectivity (DC), wherein the UE, e.g. UE 120, may be connected to multiple network nodes 110, 112. The UEs 120, 122 may communicate with each other, in case device-to-device (D2D) communication interface is established between them via a so-called sidelink (SL). Such D2D communications may be referred to as machine-to-machine, peer-to-peer (P2P) communications, or vehicle-to-vehicle (V2V), for example.

In the case of multiple network nodes in the communication network, the network nodes may be connected to each other via an interface. LTE specifications call such an interface as X2 interface. An interface between an LTE node and a 5G node, or between two 5G nodes may be called Xn interface.

The network nodes 110 and 112 may be further connected via another interface to a core network 116 of the communication network. The LTE specifications specify the core network as an evolved packet core (EPC), and the core network may comprise e.g. a mobility management entity (MME) and a gateway node. The MME may handle mobility of terminal devices in a tracking area encompassing a plurality of cells and handle signaling connections between the terminal devices and the core network. The gateway node may handle data routing in the core network and to/from the terminal devices. The 5G specifications specify the core network as a 5G core (5GC). The 5G core may comprise e.g. an access and mobility management function (AMF) and a user plane function/gateway (UPF) and other functions. The AMF may handle termination of non-access stratum (NAS) signaling, NAS ciphering & integrity protection, registration management, connection management, mobility management, access authentication and authorization, security context management. The UPF node may support packet routing and forwarding, packet inspection and quality of service (QoS) handling, for example.

Artificial intelligence (AI) can be broadly defined as getting computers to perform tasks mimicking human brain. Machine learning (ML) is one category of AI techniques: computer algorithms able to automatically improve their performance without explicit programming. AI algorithms were first conceived in the 1950's but only in recent years AI/ML has become useful in vast area of real-world applications, partly due to advancements in computational power and in providing storage capacity for data.

AI/ML can help adjust and optimize radio access network (RAN) parameters and settings using (real-time) monitoring and prediction of network performance, quality, and demand. Additionally, AI/ML can identify and diagnose degradation in network performance, as well as provide protection from cyberattacks. AI/ML is usable in energy saving, load balancing, mobility optimization, link adaptation and security just to mention but a few.

It is envisioned that AI/ML will enable real-time analysis as well as auto-mated operation and control in 5G and beyond RAN. This requires the availability of data streamed from wireless devices in a timely manner, especially in extremely time-critical applications such as real-time video monitoring and extended reality (XR). This may be reflected in network architecture, such as by placing and moving ML agents to the required locations in the network, for example for data collection. User devices (mobile devices) may assist network in decision-making in resource management, thus a user device may act as an infrastructure resource.

As the network evolves to programmable and flexible cloud native implementation, AI/ML-based network automation will be used to simplify network management and optimization. It is expected that parts of the air interface, in particular signal processing algorithms, are supported and eventually even replaced with machine learning models. Thus, a 6G wireless communication standard will natively support an AI-based air interface.

Machine learning algorithms are usually classified into four different types: supervised learning, unsupervised learning, semi-supervised learning and reinforcement learning.

In supervised learning the algorithm learns from labeled data. For training, the algorithm receives input data and corresponding correct output labels. The algorithm is trained to predict accurate labels for new data.

In unsupervised learning the algorithm analyses unlabeled data. The aim is to discover patterns, relationships, or structures within the data, for example, un-supervised learning algorithms make groups of similar data points.

Semi-supervised learning is a hybrid machine learning approach that combines labeled and unlabeled data for training. A limited amount of labeled data and a larger set of unlabeled data is used to improve training. This approach is useful when acquiring labeled data is expensive or time-consuming as is the case in many real-world applications. Semi-supervised learning techniques can be applied to various tasks, such as classification, regression, and anomaly detection, allowing models to make more accurate predictions and generalize better in real-world scenarios.

Reinforcement learning is a machine learning algorithm which learns from trial and error. An ML agent interacts with environment and learns from experience aiming to maximize cumulative rewards. The ML agent receives feedback through rewards or penalties based on its actions. The agent learns to take actions that lead to the most favorable outcomes over time. The algorithm adapts to changing environments and achieves long-term goals through a sequence of actions.

An example of an ML algorithm found applicable to adjust and optimize the radio access network (RAN) parameters and settings is deep learning. Deep learning is a subset of machine learning algorithms using a neural network. Neural networks are also known as artificial neural networks (ANNs) or simulated neural net-works (SNNs). Deep learning can be based on supervised, semi-supervised or unsupervised learning.

Artificial neural networks (ANNs) are comprised of an input layer, one or more hidden layers, and an output layer. Each node of a layer, or an artificial neuron, connects to another one and has an associated weight as well as a threshold value. If the output of an individual node is above the threshold value specified to this node, the node is activated and sending or passing data to the next layer of the neural net-work.

In the case the supervised learning is applied in the training of a neural network, the training is carried out by using examples, each of which contains a known "input" and "result", forming probability-weighted associations between them. The training comprises determining the difference between the output of the neural network (a prediction) for an input and a target output for the same input. The difference is called an error value. The neural network then adjusts its weighted associations according to a learning rule and using this error value. Successive adjustments make the neural network produce output that is approaching the target output. After a sufficient number of these adjustments, the training can be terminated based on certain criteria.

In 5G and 6G networks, and beyond, it is envisaged that radio frequency (RF) electromagnetic fields (EMF) may increase. An apparatus may be configured to train a machine learning model to be used for predicting equivalent isotropic radiated power (EIRP) accurately and with low computational complexity, e.g., as described below with FIG. 2 to 6.

FIG. 2 illustrates example functionalities of an apparatus configured to train the machine learning model to output a set of prediction vectors that may be used to predict EIRP values. The apparatus may be a network device, such as, a distributed unit (DU) or a radio unit (RU).

Referring to FIG. 2, a plurality of precoding vectors (precoders) are obtained in operation 201. A precoding vector within the plurality of precoding vectors may be expressed as $\mathbf{w} \in \mathbb{C}^{N_{AE} \times 1}$, wherein $N_{AE}$ may be understood as a total number of array elements (ArrE) in an antenna array such as, e.g., a gNB antenna array. The precoding vector $\mathbf{w}$ may be understood as a precoder for a single layer downlink (DL) transmission over a frequency-flat channel. An array element may comprise multiple radiators, each radiator comprising one radiating element (RadE) for each of the two polarizations. Multiple RadEs are combined using fixed analog weights (FAW) to form an array element.

In an example embodiment, the apparatus may be a distributed unit and the plurality of precoding vectors may be generated in operation 201.

In an example embodiment, the apparatus may be a radio unit and the plurality of precoding vectors may be received in operation 201 from a distributed unit.

Equivalent isotropic radiated power (EIRP) $P_{rad}(\theta, \varphi, \mathbf{w})$ for a UE for $\mathbf{w}$ in elevation angle $\theta$ and azimuth angle $\varphi$ may be expressed as

$$P_{rad}(\theta, \varphi, \mathbf{w}) = |\mathbf{g}(\theta, \varphi)\mathbf{V}_{FA}\mathbf{w}|^2,$$

where $\mathbf{V}_{FA} \in \mathbb{C}^{N_{rad} \times N_{AE}}$ may be understood as a fixed analog weight (FAW) matrix, $N_{rad}$ may be understood as a total number of RadE in the antenna array, and $\mathbf{g}(\theta, \varphi)$ may be understood as a vector defined as

$$\mathbf{g}(\theta, \varphi) \overset{\text{def}}{=} [r_1(\theta, \varphi)\mathbf{a}(\theta, \varphi), r_2(\theta, \varphi)\mathbf{a}(\theta, \varphi)] \in \mathbb{C}^{1 \times N_{rad}}$$ . The component $\mathbf{a}(\theta, \varphi) \in \mathbb{C}^{1 \times \frac{N_{rad}}{2}}$ may be understood as an array steering vector since it depends on relative locations of dual-polarized radiators and carrier wavelengths. The components $r_1(\theta, \varphi)$ and $r_2(\theta, \varphi)$ may be understood as a first radiating element radiation response and a second radiating element radiation response, respectively, since they are complex-valued scalars that depend on radiating element radiation response. Thus, considering a frequency-selective channel with MU-MIMO transmission and $n_L$ total spatial streams, $\mathbf{W}_f = [\mathbf{w}_{f,1}, \cdots, \mathbf{w}_{f,n_L}] \in \mathbb{C}^{N_{AE} \times n_L}$ may denote the precoder on physical resource block (PRB) index $f = 1, \cdots, N_F$, wherein $N_F$ may be understood as a number of PRBs in an orthogonal frequency-division multiplexing (OFDM) system. Then, the EIRP may be expressed as

$$P_{rad}\left(\theta, \varphi, \{\mathbf{W}_f\}_{f=1}^{N_f}\right) = \sum_{f=1}^{N_F} \sum_{l=1}^{n_L} |\mathbf{g}(\theta, \varphi)\mathbf{V}_{FA}\mathbf{w}_{f,l}|^2.$$

Referring to FIG. 2, a set of radiated power measurement values are obtained in operation 202. The set may comprise one or more radiated power measurement values. In an example embodiment, the set of radiated power measurement values may comprise equivalent isotropic radiated power (EIRP) measurement values. A radiated power measurement value within the set of radiated power measurement values corresponds to an angle pair within a set of angle pairs and to a precoding vector within the plurality of precoding vectors. This may be understood in such a way that for each radiated power measurement value there exists a unique combination of one angle pair and one precoding vector. In an example embodiment, each radiated power measurement value within the set of radiated power measurement values corresponds to an angle pair within the set of angle pairs and to a precoding vector within the plurality of precoding vectors. In an example embodiment, the set of angle pairs may comprise one angle pair. In an example embodiment, the set of angle pairs may comprise a plurality of angle pairs. In an example embodiment, the set of angle pairs may correspond to a first set of angle values and a second set of angle values. In an example embodiment, the first set of angle values comprises one or more elevation angle values $\theta$ and the second set of angle values comprises one or more azimuth angle values $\varphi$.

In an example embodiment, the apparatus may be a distributed unit. Then the functionalities of operation 202 may comprise that the plurality of precoding vectors is transmitted to a radio unit and the set of radiated power measurement values and the set of angle pairs is received from a database.

In an example embodiment, the apparatus may be a radio unit. Then the functionalities of operation 202 may comprise that beamforming and transmitting are performed per precoding vector within the plurality of precoding vectors, and the set of radiated power measurement values and the set of angle pairs are received from the distributed unit.

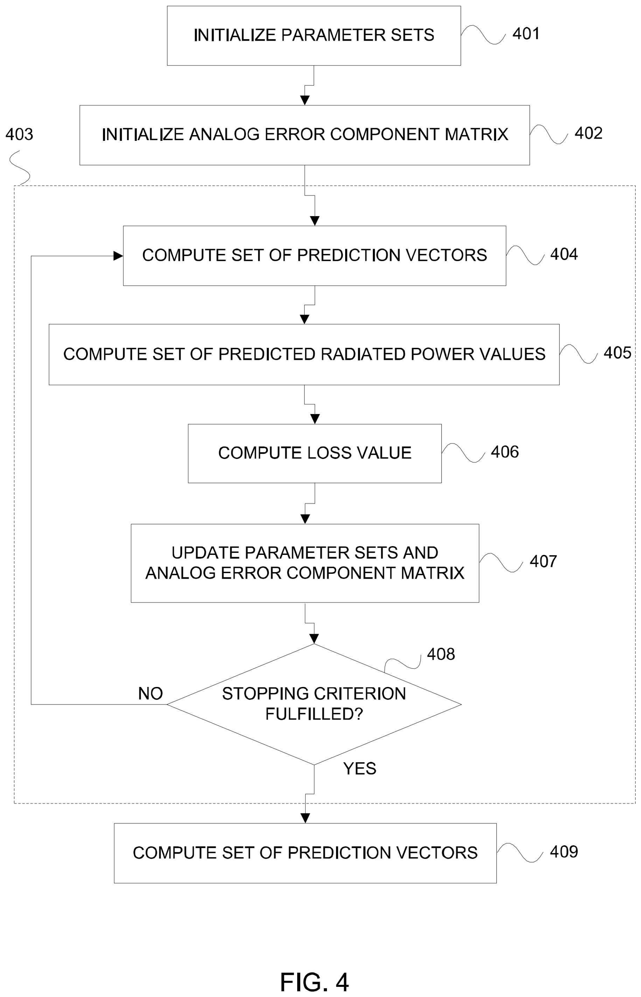

Referring to FIG. 2, a machine learning (ML) model is trained in operation 203 to output a set of prediction vectors for predicting radiated power values from an input of the set of angle pairs. In an example embodiment, the machine-learning model may be understood as a complex vector that is obtained as a product of one or more trainable complex vectors and a trainable diagonal matrix, with each entry of each trainable complex vector and the diagonal of the trainable diagonal matrix defined by one or more trainable weights. The set of prediction vectors may comprise one ore more prediction vectors, one prediction vector per angle pair. In an example embodiment, the radiated power values may be EIRP values. The ML model is trained using training data comprising the set of radiated power measurement values as a ground truth and the plurality of precoding vectors, as described in more detail below with reference to FIG. 4. In an example embodiment, the machine-learning model may be trained using supervised learning.

In an example embodiment, the apparatus may be a radio unit and the set of prediction vectors may be transmitted to a database or to the distributed unit, after training the machine learning model.

FIG. 3 illustrates an example further functionality of an apparatus configured to train the machine learning model to output a set of prediction vectors. The apparatus may be a network device, such as, a distributed unit or a radio unit.

Referring to FIG. 3, the process continues from operation 203 in FIG. 2. The set of prediction vectors is stored in operation 301, e.g., to a database.

FIG. 4 illustrates an example functionality of an apparatus configured to train the machine learning model to output the set of prediction vectors. The functionalities illustrated in FIG. 4 are assumed to be performed within operation 203 in FIG. 2.

Referring to FIG. 4, one or more parameter sets is initialized in operation 401, a parameter set per angle pair within the set of angle pairs. In an example embodiment, the one or more parameter sets may comprise

$$\boldsymbol{\omega} \overset{\text{def}}{=} \left\{\omega_{l,\theta,\varphi} \in \mathbb{R}, \forall (\theta, \varphi) \in \Theta \times \Phi \right\}_{l=1}^{N_{rad}/2},$$

$$\boldsymbol{\alpha} \overset{\text{def}}{=} \left\{\alpha_{1,\theta,\varphi}, \alpha_{2,\theta,\varphi} \in \mathbb{R}, \forall (\theta, \varphi) \in \Theta \times \Phi \right\},$$

and

$$\boldsymbol{\beta} \overset{\text{def}}{=} \left\{\beta_{1,\theta,\varphi}, \beta_{2,\theta,\varphi} \in \mathbb{R}, \forall (\theta, \varphi) \in \Theta \times \Phi \right\},$$

wherein $\Theta \times \Phi$ may be understood as the set of angle pairs. Estimates for the array steering vector, the first radiating element radiation response, and the second radiating element radiation response may be expressed with these parameters as

$$\hat{\mathbf{a}}(\theta, \varphi) \leftarrow \left[ e^{j\omega_{1,\theta,\varphi}}, \cdots, e^{j\omega_{\frac{N_{rad}}{2},\theta,\varphi}} \right],$$

$$\hat{r}_1(\theta, \varphi) \leftarrow \alpha_{1,\theta,\varphi} e^{j\beta_{1,\theta,\varphi}},$$

and

$$\hat{r}_2(\theta, \varphi) \leftarrow \alpha_{2,\theta,\varphi} e^{j\beta_{2,\theta,\varphi}}.$$

Referring to FIG. 4, an analog error component matrix is initialized in operation 402. In an example embodiment, the analog error component matrix may be initialized by

$$\boldsymbol{\gamma} \overset{\text{def}}{=} \{\gamma_l \in \mathbb{R}\}_{l=1}^{N_{AE}},$$

$$\boldsymbol{\nu} \overset{\text{def}}{=} \{\nu_l \in \mathbb{R}\}_{l=1}^{N_{AE}},$$

and

$$\mathbf{D} \leftarrow \text{diag}\left[\gamma_1 e^{j\nu_1}, \cdots, \gamma_{N_{AE}} e^{j\nu_{N_{AE}}}\right].$$

The analog error component matrix is independent of the set of angle pairs and it may be understood as corresponding to errors due to analog components.

Referring to FIG. 4, an iterative training procedure is performed, i.e., repeated in operation 403, until a stopping criterion is fulfilled. The iterative training procedure comprises performing operations 404 to 408, as described in the following. The set of prediction vectors is computed in operation 404, a prediction vector within the set of prediction vectors per angle pair within the set of angle pairs. The set of prediction vectors is computed based on the one or more parameter sets, the analog error component matrix, and a fixed analog weight matrix defined by an antenna array configuration, as described above with reference to FIG. 2. The set of prediction vectors may be expressed as

$$\hat{\mathbf{b}}(\theta, \varphi) = \hat{g}(\theta, \varphi) V_{FA} \mathbf{D} \in \mathbb{C}^{1 \times N_{AE}} \; \forall (\theta, \varphi) \in \Theta \times \Phi,$$

$$\hat{g}(\theta, \varphi) \leftarrow [\hat{r}_1(\theta, \varphi)\hat{\mathbf{a}}(\theta, \varphi), \hat{r}_2(\theta, \varphi)\hat{\mathbf{a}}(\theta, \varphi)] \in \mathbb{C}^{1 \times N_{rad}}.$$

Referring to FIG. 4, a set of predicted radiated power values are computed in operation 405, a predicted radiated power value per angle pair within the set of angle pairs and per precoding vector within the plurality of precoding vectors. The predicted radiated power value is computed based on the prediction vector corresponding to the angle pair and on the precoding vector. In an example embodiment, the functionalities in operation 405 comprise that a dot product between the prediction vector and the precoding vector is computed, a magnitude of the dot product is computed, and a square of the magnitude of the dot product is computed. The predicted radiated power value may be expressed as

$$P_{\text{predicted}} = |\widehat{\boldsymbol{g}}(\theta, \varphi)\boldsymbol{V}_{FA}\mathbf{D}\boldsymbol{w}_i|^2$$

for angle pair $(\theta, \varphi)$ and for precoding vector $\boldsymbol{w}_i$.

Referring to FIG. 4, a loss value between the set of predicted radiated power values and the set of radiated power measurement values is computed in operation 406. In an example embodiment, the loss value may be computed using a loss function expressed as

$$\mathcal{L}_{\alpha, \beta, \omega, \gamma, \nu} = \frac{1}{n_{train}|\Theta \times \Phi|} \sum_{(\theta, \varphi) \in \Theta \times \Phi} \sum_{\mathbf{w}_i \in \mathcal{W}} \left( \log_{10} \left( \frac{P_{rad}(\theta, \varphi, \mathbf{w}_i)}{|\widehat{\mathbf{g}}(\theta, \varphi)\mathbf{V}_{FA}\mathbf{D}\mathbf{w}_i|^2} \right) \right)^2,$$

where $n_{train}$ may be understood as a number of training samples. In another example embodiment, the loss value may be computed using a normalized mean-squared error (NMSE) loss expressed as

$$NMSE_{loss} = \frac{1}{n_{train}|\Theta \times \Phi|} \sum_{(\theta, \varphi) \in \Theta \times \Phi} \sum_{\mathbf{w}_i \in \mathcal{W}} \left( \frac{P_{rad}(\theta, \varphi, \mathbf{w}_i) - |\widehat{\mathbf{g}}(\theta, \varphi)\mathbf{V}_{FA}\mathbf{D}\mathbf{w}_i|^2}{P_{rad}(\theta, \varphi, \mathbf{w}_i)} \right)^2.$$

Referring to FIG. 4, the one or more parameter sets and the analog error component matrix are updated in operation 407, based on the loss value. In an example embodiment, the one or more parameter sets and the analog error component matrix are updated using stochastic gradient descent (SGD). It is determined in operation 408, whether the stopping criterion is fulfilled. In an example embodiment, the stopping criterion may comprise, e.g., the loss value meeting a stopping threshold. If the stopping criterion is not fulfilled (operation 408: no), the process continues in operation 404 by computing the set of prediction vectors based on the updated one or more parameter sets, the updated analog error component matrix, and the fixed analog weight matrix. If the stopping criterion is fulfilled, the (final) set of prediction vectors is computed in operation 409 based on the updated one or more parameter sets, the updated analog error component matrix, and the fixed analog weight matrix.

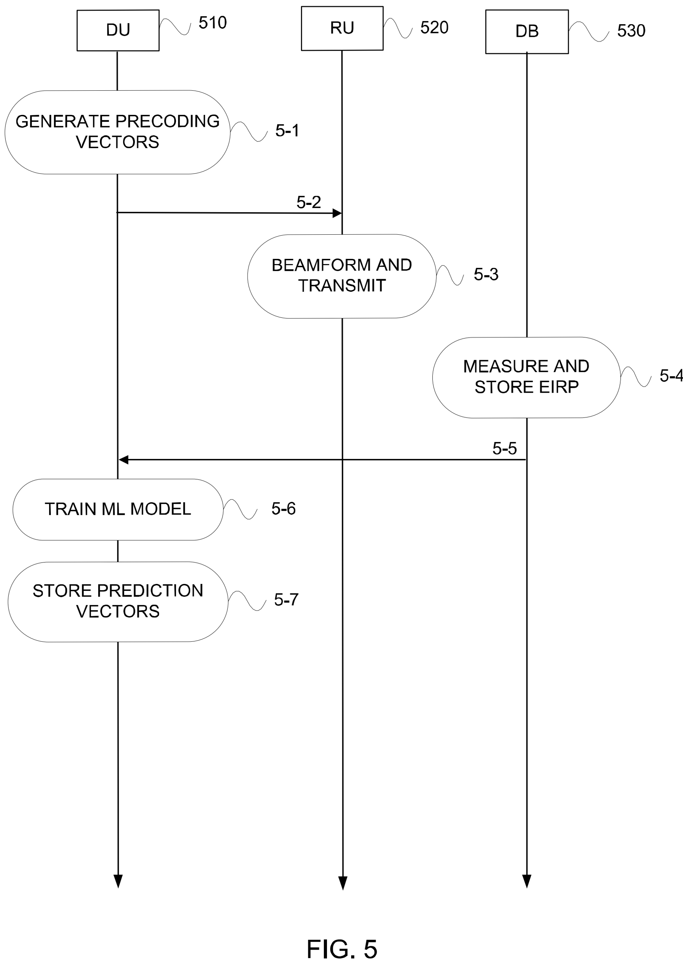

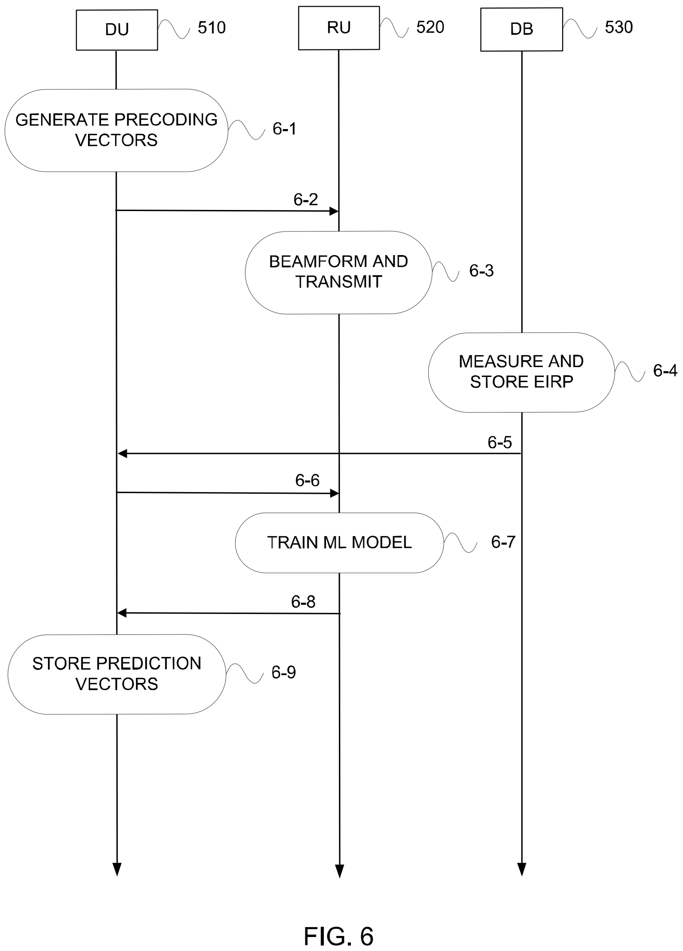

FIG. 5 and 6 illustrate signaling diagrams according to examples of information exchange in a communication network configured to enable training a machine learning model to output prediction vectors for predicting radiated power values. The term "DU" is used for a distributed unit 510 and the term "RU" is used for a radio unit 520 described above. The term "DB" is used for a database 530, which may be any entity configured to measure and store radiating power measurement values. The database may be comprised in, e.g., the distributed unit of a base station.

Referring to FIG. 5, the DU is configured to train the machine learning model. The DU generates in block 5-1 a plurality of precoding vectors. The DU may perform this in response to receiving an indication to train or re-train the machine learning model. The DU transmits (message 5-2) the plurality of precoding vectors to the RU. The RU performs in block 5-3 beamforming and transmitting with each precoding vector within the plurality of precoding vectors. The DB performs in block 5-4 measuring and storing radiated power measurement values for each precoding vector within the plurality of precoding vectors in each angle pair within a set of angle pairs. The DB transmits (message 5-5) the set of radiated power measurement values to the DU. The set of radiated power measurement values are transmitted in a predefined order such that they may be mapped to the set of angle pairs at the DU. In an example embodiment, the DB also transmits the set of angle pairs to the DU. The DU trains in block 5-6 the machine learning model to output a set of prediction vectors for predicting radiated power values from an input of the set of angle pairs, using training data comprising the set of radiated power measurement values as a ground truth and the plurality of precoding vectors. The DU stores in block 5-7 the prediction vectors and the set of angle pairs.

Referring to FIG. 6, the RU is configured to train the machine learning model. Such a case may arise if the DU and the RU are manufactured by different vendors, and thus the DU may not have access to necessary information to perform the training. The DU generates in block 6-1 a plurality of precoding vectors. The DU may perform this in response to receiving an indication to train or re-train the machine learning model. The DU transmits (message 6-2) the plurality of precoding vectors to the RU. The RU performs in block 6-3 beamforming and transmitting with each precoding vector within the plurality of precoding vectors. The DB performs in block 6-4 measuring and storing radiated power measurement values for each precoding vector within the plurality of precoding vectors in each angle pair within a set of angle pairs. The DB transmits (message 6-5) the set of radiated power measurement values to the DU. The DU transmits (message 6-6) the set of radiated power measurement values to the RU. The set of radiated power measurement values are transmitted in a predefined order such that they may be mapped to the set of angle pairs at the DU and/or at the RU. The RU trains in block 6-7 the machine learning model to output a set of prediction vectors for predicting radiated power values from an input of the set of angle pairs, using training data comprising the set of radiated power measurement values as a ground truth and the plurality of precoding vectors. The RU transmits (message 6-8) the set of prediction vectors to the DU. The DU stores in block 6-9 the prediction vectors and the set of angle pairs.

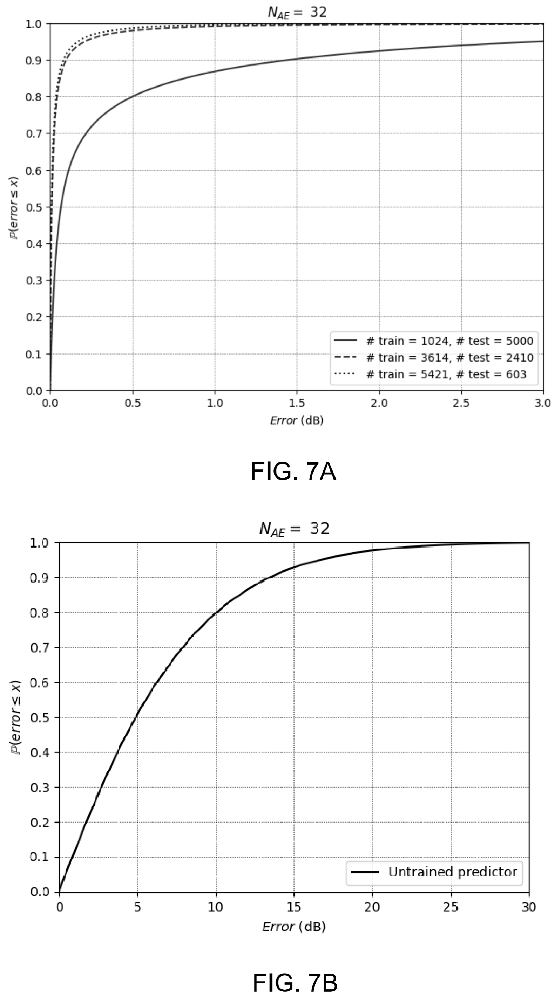

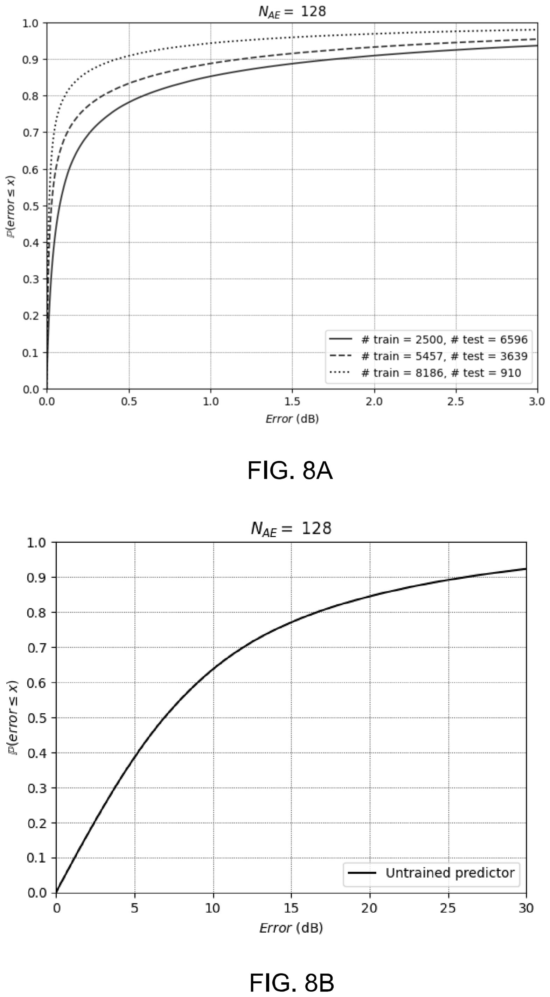

FIG. 7A and 7B and FIG. 8A and 8B illustrate numerical performance evaluation comparisons of prediction vectors (predictors) generated by trained machine learning models. The array steering vector $\bar{\mathbf{a}}(\theta, \varphi)$ was modelled as having a phase error normally distributed with zero mean and a standard deviation of 10°, while the first radiating element radiation response $\bar{r}_1(\theta, \varphi)$ and the second radiating element radiation response $\bar{r}_2(\theta, \varphi)$ was modelled as having magnitude errors normally distributed with mean 0dB and a standard deviation of 3dB and phase errors normally distributed with zero mean and a standard deviation of 10°. A discrete Fourier transform (DFT) codebook with 1024 precoding vectors (for $N_{AE}$ = 32) and 4096 precoding vectors (for $N_{AE}$ = 128) was used. For $N_{AE}$ = 32, the antenna array was arranged as 2x8x2 (vertical x horizontal x polarization) while for $N_{AE}$ = 128, the array was arranged as 4x16x2. In both the cases, 8 RadE was combined to form an ArrE. Additionally, 5000 precoders with their entries drawn independently from a complex normal distribution with mean zero and standard deviation of 5 were used. All the precoders were normalized to have the same norm. Thus, the total number of samples in the set was 6024 for $N_{AE}$ = 32 and 9096 for $N_{AE}$ = 128. The calibration errors resulting from the analog components were modelled as having a phase error normally distributed with zero mean and a standard deviation of 3°, and a magnitude error normally distributed with zero mean and a standard deviation of 3% of the actual magnitude. This may be understood to model $\hat{\mathbf{w}}$ for every $\mathbf{w}$ in the codebook. The technique described above with reference to FIG. 4 was employed to train and obtain the set of prediction vectors. 18 uniformly spaced values for θ (i.e., |Θ| = 18) as the first set of angle values and 36 uniformly spaced values for φ (i.e., |Φ| = 36) as the second set of angle values were taken for the set of angle pairs. Such training may be performed with a graphic processing unit with adequate RAM capacity, e.g., with 4 GB RAM.

FIG. 7A illustrates prediction error cumulative distribution functions (CDFs) for $N_{AE}$ = 32 for three different training sample sizes (1024, 3614, and 5421). FIG. 7B illustrates the CDF of the error for an untrained predictor. A substantial performance improvement may be observed with training.

FIG. 8A illustrates prediction error cumulative distribution functions (CDFs) for $N_{AE}$ = 128 for three different training sample sizes (2500, 5457, and 8186). FIG. 8B illustrates the CDF of the error for an untrained predictor. A substantial performance improvement may be observed with training.

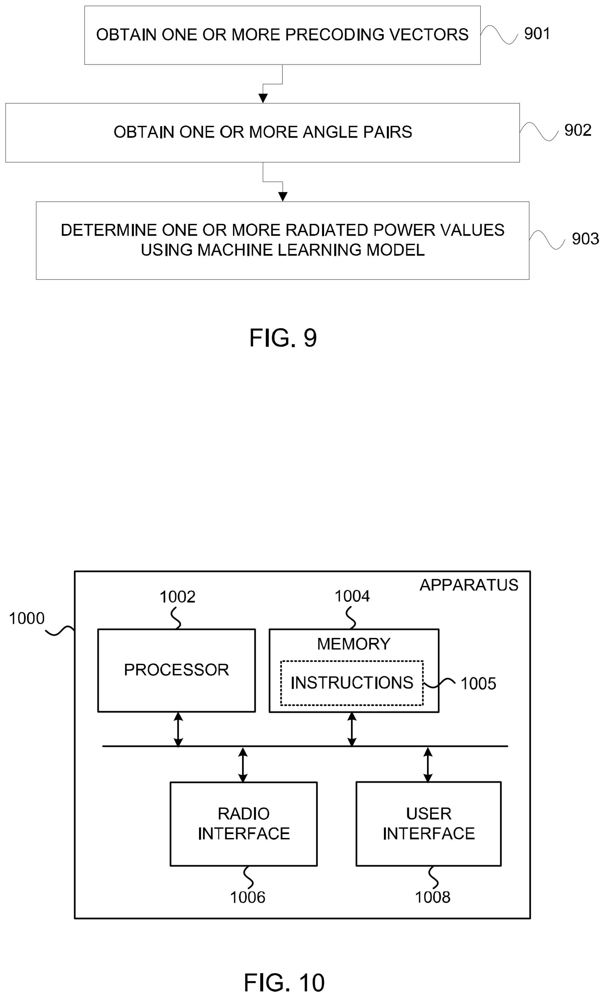

FIG. 9 illustrates an example functionality of an apparatus configured to use the machine learning model trained according to the examples described above to predict radiated power values.

Referring to FIG. 9, one or more precoding vectors are obtained in operation 901. One or more angle pairs are obtained in operation 902. In an example embodiment, the one or more angle pairs correspond to one or more elevation angle values θ and one or more azimuth angle values φ. One or more predicted radiated power values are determined operation 903, based on the one or more prediction vectors and the one or more angle pairs, using the machine learning model trained to output the set of prediction values. In an example embodiment, the functionalities of operation 903 may comprise that the set of prediction vectors corresponding to the one or more angle pairs is obtained and then the predicted radiated power values are computed based on the set of prediction vectors and the one or more precoding vectors, as explained in more detail above with reference to FIG. 4.

FIG. 10 shows, by way of example, a block diagram of an apparatus 1000. The apparatus 1000 comprises, for example, at least one processor 1002 and at least one memory 1004 storing instructions 1005 that, when executed by the at least one processor, cause the apparatus 1000 at least to perform the method or methods as disclosed herein, and any of the embodiments thereof. In an example, the at least one memory and the instructions (e.g., a computer program code, software), are configured, with the at least one processor, to cause the apparatus 1000 to perform the method or methods as disclosed herein, and any of the embodiments thereof.

Referring to FIG. 10, the processor 1002 may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in analog, digital, and/or quantum circuitry, and (b) combinations of hardware circuit(s) and software, such as, as applicable: (i) a combination of analog, digital, and/or quantum hardware circuit(s) with software/firmware and (ii) any or all portions of hardware processor(s) (including digital and/or quantum processor(s)) with software, and memory(ies) that work together to cause an apparatus, such as a mobile device, computing device, or server, to perform various functions) and (c) any or all portions of hardware circuit(s), such as a microprocessor(s), processor(s), and/or quantum processor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Referring to FIG. 10, the memory 1004 may be implemented using any suitable data storage technology. The memory 1004 may comprise a database for storing data. The memory 1004 may be at least in part external to apparatus 1000 but accessible to apparatus 1000.

Referring to FIG. 10, the instructions 1005 may be comprised in a computer readable medium or a non-transitory computer readable medium. The term "non-transitory", as used herein, is a limitation of the medium itself (i.e., tangible, not a signal) as opposed to a limitation on data storage persistency (e.g., random access memory, RAM, vs. read only memory, ROM).

As an example, the apparatus 1000 is a network node, e.g. the network node of FIG.1. In another embodiment, the apparatus is comprised in such a network node, e.g. as a chipset configured to control the network node. The apparatus 1000 may be caused or configured to perform at least the method of FIG. 2 and/or any one or more of the embodiments described. The apparatus 1000 may comprise one or more entities of any of protocol layers, such as a MAC entity, an RRC entity, an RLC entity, a PDCP entity or a PHY entity.

The apparatus 1000 comprises a radio interface 1006. The radio interface 1006 may provide the apparatus 1000 with communication capabilities. The radio interface 1006 may comprise a receiver configured to receive information in accordance with at least one cellular or non-cellular standard. The radio interface 1006 may comprise a transmitter configured to transmit information in accordance with at least one cellular or non-cellular standard. The receiver may comprise more than one receiver. The transmitter may comprise more than one transmitter. The radio interface 1006 may comprise a transceiver configured to receive and transmit information in accordance with at least one cellular or non-cellular standard. The transceiver may comprise more than one transceiver.

The apparatus 1000 may comprise a user interface 1008 comprising, for example, at least one of a keypad, a microphone, a touch display, a display, a speaker, etc. The user interface 1008 may be used to control the apparatus by the user. The user interface 1008 may be external to the apparatus 1000. For example, the apparatus 1000 may be connected to another device, such as a computer, either via wireless or wired connection, and the apparatus 1000 is controlled by the user via the computer.

In an embodiment, at least some of the processes described herein may be carried out by an apparatus comprising means for carrying out at least some of the described processes. Means for performing method steps as disclosed herein may include software and/or hardware components of the apparatus 1000. For example, the at least one processor 1002, the memory 1004, and the computer program code form means for carrying out the method or methods as disclosed herein, and any of the embodiments thereof. As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully over-lapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

The functionalities described herein may be performed, at least in part, by one or more computer program product components such as for example software components. According to an example embodiment, the apparatus 1000 may comprise a processor or processor circuitry, such as for example a microcontroller, configured by the program code when executed to execute the embodiments of the operations and functionality described. The instructions 1005 is provided as an example of instructions which, when executed by the at least one processor 1002, cause performance of apparatus. Alternatively, or additionally, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

The apparatus 1000 may be configured to perform or cause performance of any aspect of the method(s) described herein. Further, a computer program may comprise instructions for causing, when executed, an apparatus to perform any aspect of the method(s) described herein. The computer program may be stored on a computer-readable medium. Further, the apparatus 1000 may comprise means for performing any aspect of the method(s) described herein. In one example, the means may comprise the at least one processor 1002, the at least one memory 1004 including the instructions 1005, configured to, when executed by the at least one processor 1002, cause the apparatus 1000 to perform the method(s). In general, computer program instructions may be executed on means providing generic processing functions. The method(s) may be thus computer-implemented, for example, algorithm(s) executable by the generic processing functions, an example of which is the at least one processor 1002. The means may comprise transmission and/or reception means, for example one or more radio transmitters or receivers, which may be coupled or be configured to be coupled to one or more antennas, or transmitter(s) or receiver(s) of a wired communication interface.

Although the subject matter has been described in language specific to structural features and/or acts, it is to be understood that the subject matter defined in the appended claims is not necessarily limited to the specific features or acts described above. Rather, the specific features and acts described above are disclosed as example embodiments of implementing the claims and other equivalent features and acts are intended to be within the scope of the claims.

It will be understood that the benefits and advantages described above may relate to one example embodiment or may relate to several example embodiments. The example embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual steps may be deleted from any of the methods without departing from the scope of the subject matter described herein. Aspects of any of the example embodiments described above may be combined with aspects of any of the other example embodiments described to form further example embodiments without losing the effect sought.

It will be understood that the above description is given by way of example embodiments only and that various modifications may be made by those skilled in the art. The above specification, example embodiments and data provide a complete description of the structure and use of exemplary embodiments. Although various example embodiments have been described above with a certain degree of particularity, or with reference to one or more individual embodiments, those skilled in the art could make numerous alterations to the disclosed example embodiments without departing from scope of this specification.

**Claims**

1. An apparatus comprising means for:

   obtaining a plurality of precoding vectors;
   obtaining a set of radiated power measurement values, a radiated power measurement value within the set of radiated power measurement values corresponding to an angle pair within a set of angle pairs and to a precoding vector within the plurality of precoding vectors; and
   training a machine learning model to output a set of prediction vectors for predicting radiated power values from an input of the set of angle pairs, using training data comprising the set of radiated power measurement values as a ground truth and the plurality of precoding vectors.

2. An apparatus according to claim 1, wherein the set of angle pairs corresponds to a first set of angle values comprising one or more elevation angle values and a second set of angle values comprising one or more azimuth angle values.

3. An apparatus according to any of claims 1 or 2, wherein the training the machine learning model comprises means for:

   initializing one or more parameter sets, a parameter set per angle pair within the set of angle pairs;
   initializing an analog error component matrix;
   performing, until a stopping criterion is fulfilled, an iterative training procedure comprising:

   computing the set of prediction vectors, a prediction vector within the set of prediction vectors per angle pair within the set of angle pairs, based on the one or more parameter sets, the analog error component matrix, and a fixed analog weight matrix defined by an antenna array configuration;
   computing a set of predicted radiated power values, a predicted radiated power value per angle pair within the set of angle pairs and per precoding vector within the plurality of precoding vectors, based on the prediction vector corresponding to the angle pair and the precoding vectors;
   computing a loss value between the set of predicted radiated power values and the set of radiated power measurement values; and
   updating the one or more parameter sets and the analog error component matrix, based on the loss value; and

   computing the set of prediction vectors, based on the updated one or more parameter sets, the updated analog error component matrix, and the fixed analog weight matrix.

4. An apparatus according to claim 3, wherein a parameter set within the one or more parameter sets comprises an array steering vector, a first radiating element radiation response, and a second radiating element radiation response.

5. An apparatus according to any of claims 3 - 4, wherein the computing the set of predicted radiated power values comprises means for, per angle pair within the set of angle pairs, per precoding vector within the plurality of precoding vectors:

   computing a dot product between the prediction vector and the precoding vector;
   computing a magnitude of the dot product; and
   computing a square of the magnitude of the dot product.

6. An apparatus according to any of claims 3 - 5, wherein the updating the plurality of parameter sets comprises means for using stochastic gradient descent.

7. An apparatus according to any of the preceding claims, wherein the obtaining the plurality of precoding vector comprises means for generating the plurality of precoding vectors, and wherein the obtaining the set of radiated power measurement values comprises causing the apparatus to perform:

   transmitting, to a radio unit, the plurality of precoding vectors; and
   receiving, from a database, the set of radiated power measurement values.

8. An apparatus according to any of claims 1 - 6, wherein the obtaining the plurality of precoding vectors comprises means for receiving, from a distributed unit, the plurality of precoding vectors, and wherein the obtaining the set of radiated power measurement values comprises causing the apparatus to perform:

   performing, per precoding vector within the plurality of precoding vectors, beamforming and transmitting; and
   receiving, from the distributed unit, the set of radiated power measurement values.

9. An apparatus according to claim 8, wherein the apparatus further comprising means for:
   transmitting, to the distributed unit, the set of prediction vectors.

10. An apparatus according to any of the preceding claims, wherein the apparatus further comprising means for:
    storing the set of prediction vectors.

11. An apparatus according to any of the preceding claims, wherein the radiated power comprises equivalent isotropic radiated power.

12. A method, comprising:

   obtaining a plurality of precoding vectors;
   obtaining a set of radiated power measurement values, a radiated power measurement value within the set of radiated power measurement values corresponding to an angle pair within a set of angle pairs and to a precoding vector within the plurality of precoding vectors; and
   training a machine learning model to output a set of prediction vectors for predicting radiated power values from an input of the set of angle pairs, using training data comprising the set of radiated power measurement values as ground truth and the plurality of precoding vectors.

13. An apparatus comprising means for:

   obtaining one or more precoding vectors;
   obtaining one or more angle pairs;
   determining one or more predicted radiated power values, based on the one or more precoding vectors and the one or more angle pairs, using the machine learning model trained with a method according to claim 12.

14. A computer-readable medium comprising program instructions which, when executed by an apparatus, cause the apparatus to perform at least the following:

obtaining a plurality of precoding vectors;

obtaining a set of radiated power measurement values, a radiated power measurement value within the set of radiated power measurement values corresponding to an angle pair within a set of angle pairs and to a precoding vector within the plurality of precoding vectors; and

training a machine learning model to output a set of prediction vectors for predicting radiated power values from an input of the set of angle pairs, using training data comprising the set of radiated power measurement values as ground truth and the plurality of precoding vectors.

**15.** A computer program comprising instructions for causing an apparatus to at least:

obtain a plurality of precoding vectors;

obtain a set of radiated power measurement values, a radiated power measurement value within the set of radiated power measurement values corresponding to an angle pair within a set of angle pairs and to a precoding vector within the plurality of precoding vectors; and

train a machine learning model to output a set of prediction vectors for predicting radiated power values from an input of the set of angle pairs, using training data comprising the set of radiated power measurement values as ground truth and the plurality of precoding vectors.

FIG. 1

FIG. 2

FIG. 3

INITIALIZE PARAMETER SETS — 401

INITIALIZE ANALOG ERROR COMPONENT MATRIX — 402

403

COMPUTE SET OF PREDICTION VECTORS — 404

COMPUTE SET OF PREDICTED RADIATED POWER VALUES — 405

COMPUTE LOSS VALUE — 406

UPDATE PARAMETER SETS AND ANALOG ERROR COMPONENT MATRIX — 407

408
STOPPING CRITERION FULFILLED?

NO

YES

COMPUTE SET OF PREDICTION VECTORS — 409

FIG. 4

FIG. 5

FIG. 6

$N_{AE} = 32$

FIG. 7A

$N_{AE} = 32$

FIG. 7B

$N_{AE} = 128$

FIG. 8A

$N_{AE} = 128$

FIG. 8B

OBTAIN ONE OR MORE PRECODING VECTORS  ~ 901

OBTAIN ONE OR MORE ANGLE PAIRS  ~ 902

DETERMINE ONE OR MORE RADIATED POWER VALUES
USING MACHINE LEARNING MODEL  ~ 903

**FIG. 9**

1000 ~

APPARATUS

1002
PROCESSOR

1004
MEMORY
INSTRUCTIONS  ~ 1005

RADIO
INTERFACE
1006

USER
INTERFACE
1008

**FIG. 10**

Europäisches
Patentamt

European
Patent Office

Office européen
des brevets

# EUROPEAN SEARCH REPORT

**Application Number**

EP 26 15 4702

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/177396 A1 (NOKIA SOLUTIONS & NETWORKS OY [FI]; NOKIA AMERICA CORP [US]) 21 September 2023 (2023-09-21) * paragraph [0001] * * paragraph [0025] * * paragraph [0032] - paragraph [0038] * * paragraph [0040] - paragraph [0060] * * figures 4, 5, 6 * ----- | 1-15 | INV. H04B7/0456 H04B17/10 |

**TECHNICAL FIELDS SEARCHED (IPC)**

H04B

The present search report has been drawn up for all claims

| Place of search | Date of completion of the search | Examiner |
|---|---|---|
| Munich | 28 May 2026 | Marzenke, Marco |

EPO FORM 1503 03.82 (P04C01)

## ANNEX TO THE EUROPEAN SEARCH REPORT
## ON EUROPEAN PATENT APPLICATION NO.

EP 26 15 4702

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2026

| Patent document cited in search report | Publication date | Patent family member(s) | Publication date |
|---|---|---|---|
| WO 2023177396 A1 | 21-09-2023 | EP 4494281 A1 | 22-01-2025 |
| | | US 2025184022 A1 | 05-06-2025 |
| | | WO 2023177396 A1 | 21-09-2023 |

EPO FORM P0459

For more details about this annex : see Official Journal of the European Patent Office, No. 12/82